# EUROPEAN PATENT APPLICATION

(11) **EP 2 144 260 A1**
(43) Date of publication of application: **13.01.2010**
(21) Application number: 08739754.3
(22) Date of filing: 27.03.2008
(51) Int. Cl.: H01G 9/058, H01G 9/00

(54) **METHOD FOR PRODUCING CARBON PARTICLE FILM, LAMINATED ELECTRODE, AND ELECTRIC DOUBLE LAYER CAPACITOR**

(30) Priority: 30.03.2007 JP 2007091206
(71) Applicant: Sumitomo Chemical Company, Limited, Tokyo 104-8260 (JP)
(72) Inventor: EGUCHI, Hironori, Ichihara-shi Chiba 299-0125 (JP); SAKAYA, Taiichi, Chiba-shi Chiba 266-0031 (JP); SHIBUTA, Takumi, St. Paul, Minnesota 55108 (US)
(74) Representative: Vossius & Partner
(86) International application number: PCT/JP2008/056646
(87) International publication number: WO 2008/123577

(57) **Abstract**

Provided is a method for producing a film comprising inorganic particles and carbon particles bound together with the inorganic particles, the method comprising a step of compressing a film composed of a mixture comprising carbon particles and inorganic particles at a temperature which is not higher than the melting point of the carbon particles and not higher than the melting point of the inorganic particles to increase the bulk density of the mixture. Moreover, a method for producing a laminated electrode and a method for producing an electric double layer capacitor, both using the foregoing method, are provided.

## Description

### TECHNICAL FIELD

The present invention relates to a method for producing a film comprising inorganic particles and carbon particles bound together with the inorganic particles, and also to a method for producing a laminated electrode and a method for producing an electric double layer capacitor, both using the foregoing method.

### BACKGROUND ART

Electric double layer capacitors have heretofore been used for storing electrical energy. As an electrode to be used for an electric double layer capacitor has been known an electrode composed of carbon particles bound with an organic binder. Fluororesins have been used as the organic binder and, in particular, polytetrafluoroethylene (PTFE) has commonly been used because it is excellent in heat resistance, chemical resistance and electrochemical stability. However, a PTFE binder usually exhibits a weak binding force, and if the quantity of PTFE is increased in order to obtain a sufficient binding strength, the electrostatic capacitance per unit volume of an electrode will decrease.

In order to increase the capacitance of an electric double layer capacitor, it is necessary to increase the electrostatic capacitance per unit volume of each electrode, and it is necessary for this purpose to increase the bulk density of each electrode. In order to increase the bulk density of an electrode, it is effective to increase the pressing pressure applied during a pressing process in the production of the electrode. However, when the increasing of the pressing pressure may have resulted in the occurrence of breakage in an electrode.

As a solution of this problem, JP 9-36005 A, for example, discloses a method in which a paste comprising carbon particles and PTFE applied onto a current collector is dried at a temperature that is not lower than the melting point of the PTFE but is lower than its decomposition temperature, and then the dried paste is pressed. According to this method, particles of the PTFE heated at the temperature that is not lower than the melting temperature of the PTFE but is lower than its decomposition temperature melt to enter spaces between activated carbon particles while fusing each other. By pressing successively, it is possible to produce an electrode having a high bulk density and a high binding strength.

However, the method disclosed in JP 9-36005 A has complicated production procedures and it is difficult to produce electrodes thereby continuously. In addition, since the molten PTFE covers the surface of carbon particles, the internal resistance becomes high.

The object of the present invention is to provide a method for easily producing a carbon particle film having a high bulk density without covering carbon particles with an organic binder, and moreover to provide a simple method for producing a laminated electrode having a large electrostatic capacitance per unit volume, and a simple method for producing an electric double layer capacitor having a large electrostatic capacitance per unit volume.

### DISCLOSURE OF THE INVENTION

One embodiment of the present invention is a method for producing a film comprising inorganic particles and carbon particles bound together with the inorganic particles, the method comprising a step of compressing a film composed of a mixture comprising carbon particles and inorganic particles at a temperature which is not higher than the melting point of the carbon particles and not higher than the melting point of the inorganic particles to increase the bulk density of the mixture. This method can be used as a method for producing an electrode film because films obtained by the method can be used as electrode films.

Another embodiment of the present invention, which is an application of the aforementioned method for producing a film, is a method for producing a laminated electrode comprising a current collector and an electrode film laminated on the current collector, the method comprising:
a step of preparing a dispersion liquid by dispersing carbon particles and inorganic particles in a liquid medium,
a step of applying the dispersion liquid to a current collector to form a dispersion liquid film on the current collector,
a step of removing the liquid medium from the dispersion liquid film to form a film composed of a mixture comprising the carbon particles and the inorganic particles on the current collector, and
a step of compressing the film of the mixture on the current collector at a temperature which is not lower than the melting point of the carbon particles and not lower than the melting point of the inorganic particles to increase the bulk density of the mixture, thereby forming a laminated electrode in which an electrode film composed of a film comprising the inorganic particles and the carbon particles bound together with the inorganic particles has been laminated on the current collector.

Another embodiment of the present invention is an application of the above-mentioned production method, that is, a method for producing an electric double layer capacitor, the method comprising disposing two laminated electrodes, each comprising a current collector and an electrode film laminated on the current collector, and a separator to render the electrode films confronted each other and separated with the separator, winding or laminating the laminated electrodes with the separator intervening the electrode films, and then packing the wound or laminated electrodes and the separator together with an electrolyte solution into a metal case, wherein the method further comprising the following steps for preparing each of the layered electrodes:
a step of preparing a dispersion liquid by dispersing carbon particles and inorganic particles in a liquid medium,
a step of applying the dispersion liquid to a current collector to form a dispersion liquid film on the current collector,
a step of removing the liquid medium from the dispersion liquid film to form a film composed of a mixture comprising the carbon particles and the inorganic particles on the current collector, and
a step of compressing the film of the mixture on the current collector at a temperature which is not lower than the melting point of the carbon particles and not lower than the melting point of the inorganic particles to increase the bulk density of the mixture, thereby forming a laminated electrode in which an electrode film composed of a film comprising the inorganic particles and the carbon particles bound together with the inorganic particles has been laminated on the current collector.

### MODE FOR CARRYING OUT THE INVENTION

One embodiment of the present invention is a method for producing a film comprising inorganic particles and carbon particles bound together with the inorganic particles, the method comprising a step of compressing a film composed of a mixture comprising carbon particles and inorganic particles at a temperature which is not higher than the melting point of the carbon particles and not higher than the melting point of the inorganic particles to increase the bulk density of the mixture.

The carbon particles in the present invention are particles made of only carbon or substantially only carbon, and examples thereof include carbon black, such as acetylene black and Ketchen black, graphite, carbon nanotubes, and carbon nanospheres. The carbon particles may be composed of either a single kind of carbon particles or a mixture of two or more kinds of carbon particles. Activated carbon, which has a large specific surface area, is preferably used. It is preferable that the carbon particles contain activated carbon having a specific surface area of 1000 m²/g or more. The average particle diameter of the carbon particles is preferably within the range of 10 nm to 50 µm, more preferably within the range of 15 nm to 30 µm, and even more preferably within the range of 20 nm to 10 µm. When two or more kinds of carbon particles are used, the average particle diameter of the carbon particles with the greatest weight proportion should just be within the above-mentioned range. The average particle diameter of carbon particles in the present invention is a value determined by dispersing the carbon particles in a liquid medium and measuring the particle size distribution by a laser diffraction/dispersion particle size distribution analyzer.

The inorganic particles referred to in the present invention include inorganic solid particles other than particles made of only carbon and particles made of substantially only carbon. Particles of, for example, metal carbonates, metal prussiates, metal cyanates, and metal thiocyanates are included in inorganic particles even thought they contain carbon. Inorganic particles function as a binder that binds carbon particles. In a film made of a mixture of carbon particles and inorganic particles, the mixture is made of substantially only carbon particles and inorganic particles. Therefore, a film obtained by compression does not contain organic binders like PTFE and is composed of substantially only carbon particles and inorganic particles. From the viewpoint of the force binding carbon particles and the heat resistance of an electrode film to be obtained, the inorganic particles are preferably silica particles and/or alumina particles, and are more preferably silica particles.

From the viewpoint of the force of binding the carbon particles, it is desirable that the average particle diameter of inorganic particles be 1/10 or less the average particle diameter of the carbon particles, and it is more desirable that the average particle diameter of the inorganic particles be 1/50 or less the average particle diameter of the carbon particles. From the viewpoint of the force binding the carbon particles, it is preferable that the average particle diameter of the inorganic particles be 1/10 or less the average particle diameter of the carbon particles and also that the average particle diameter of the inorganic particles be within the range of 1 nm to 100 nm. The average particle diameter of the inorganic particles is more preferably within the range of 1 nm to 50 nm. It is noted that the average particle diameter of inorganic particles referred to in the present invention is a value determined by dispersing the inorganic particles in a liquid medium and measuring the particle size distribution by a laser diffraction/dispersion particle size distribution analyzer. Moreover, it is preferable, from the binding force, to use chain inorganic particles made up of inorganic particles linked together in the form of a chain.

From the viewpoint of the binding force of the inorganic particles in a film to be obtained, the mixture that constitutes the film to be subjected to compression preferably contains 100 parts by weight of the carbon particles and 10 to 70 parts by weight of the inorganic particles. The amount of the inorganic particles is more preferably 15 to 50 parts by weight, and even more preferably 20 to 45 parts by weight.

While in the method for producing a film which is one embodiment of the present invention, a film made of a mixture of carbon particles and inorganic particles is compressed, the film to be subjected to the compression can be prepared by the following procedures. First, a dispersion liquid is prepared by dispersing carbon particles and inorganic particles in a liquid medium, and subsequently, the dispersion liquid is applied to a proper substrate to form a dispersion liquid film. Then, the liquid medium is removed from the dispersion liquid film, so that a film made of a mixture of the carbon particles and the inorganic particles is formed on the substrate. The material of the substrate is not particularly restricted. When a metal foil is used, a layered body to be obtained by compression finally in which the substrate and a film made of a mixture of carbon particles and inorganic particles have been laminated on the substrate can be used as a laminated electrode for the production of an electric double layer capacitor, or the like. The material of the metal foil is not particularly restricted. In order to increase the adhesiveness to the sheet made of the carbon particles and the inorganic particles, it is preferable that the surface of the substrate has been roughened by etching.

While the aforementioned liquid medium to be used for the preparation of the aforementioned dispersion liquid is not particularly restricted, it is preferably water, an alcohol, or a mixed solvent thereof because they can be removed after the application of the dispersion liquid. When the inorganic particles are silica particles, it is desirable, from the viewpoint of the force of binding the carbon particles, that the silica particles are in the form of colloid in a dispersion liquid.

The film made of the mixture of the carbon particles and the inorganic particles formed on the aforementioned substrate is compressed at a temperature that is not higher than the melting point of the carbon particles and not higher than the melting point of the inorganic particles, so that the bulk density of the mixture is increased and, as a result, a high bulk density film made of the carbon particles and the inorganic particles is produced.

The pressure applied in compressing the film is preferably within the range of 10 to 500 kgf/cm², and more preferably within the range of 50 to 300 kgf/cm². The temperature applied during the compression is preferably within the range of 10 to 50°C. By performing the compression at such a temperature, it is possible to bind the carbon particles strongly without melting the film. The film resulting from the compression may be used with the substrate laminated thereto, or alternatively it may be used in the form of a single layer film after the substrate is removed by dissolution, peeling, or the like.

The film that is composed of carbon particles and inorganic particles and has been produced by the method described above can be used suitably as an electrode. Since this film is high in bulk density, it serves as an electrode with a large surface area per unit volume and a large electrostatic capacitance. In the production of a film to be used as an electrode, it is desirable to use activated carbon, which has a large surface area, as a main material of carbon particles, and it is particularly desirable to use activated carbon having an average particle diameter that falls within the range of 1 µm to 30 µm. Activated carbon having such an average particle diameter can be obtained by adjusting the particle diameter by pulverizing commercially available activated carbon with a pulverizer, such as a ball mill. When pulverization is performed with a ball mill, it is preferable that the balls and the pulverizing container be made of nonmetal, such as alumina and agate, in order to avoid the contamination of a metal powder.

Next, the production of a laminated electrode and the production of an electric double layer capacitor, both using the aforementioned method for the film production, are described.

The laminated electrode to be produced is a layered article that includes a current collector and an electrode film laminated on the current collector, and the method for the production thereof includes the following steps:
a step of preparing a dispersion liquid by dispersing carbon particles and inorganic particles in a liquid medium,
a step of applying the dispersion liquid to a current collector to form a dispersion liquid film on the current collector,
a step of removing the liquid medium from the dispersion liquid film to form a film composed of a mixture comprising the carbon particles and the inorganic particles on the current collector, and
a step of compressing the film of the mixture on the current collector at a temperature which is not lower than the melting point of the carbon particles and not lower than the melting point of the inorganic particles to increase the bulk density of the mixture, thereby forming a laminated electrode in which an electrode film composed of a film comprising the inorganic particles and the carbon particles bound together with the inorganic particles has been laminated on the current collector.

In the production of a laminated electrode and the production of an electric double layer capacitor, it is desirable to use silica particles as inorganic particles, and in particular, so-called colloidal silica, which is an aqueous colloid of particles of silica or its hydrate, is preferably used. Colloidal silica not only inhibits flocculation of carbon particles in a dispersion liquid, but also serves as a binder that sticks carbon particles to each other or carbon particles to a current collector when a dispersion liquid is applied to the current collector to form a dispersion liquid film and then a liquid medium is removed from the dispersion liquid film to form a film made of a mixture of carbon particles and inorganic particles. In conventional electrodes, an organic binder, such as resin, has been needed in order to stick carbon particles to each other or carbon particles to a current collector. In the present invention, an effect that an electrostatic capacitance becomes larger is also generated by sticking carbon particles to each other or carbon particles to a current collector with inorganic particles instead of the conventional organic binders.

The dispersion liquid can be prepared by a method in which given amounts of carbon particles and inorganic particles are added to a liquid medium and then mixed; a method in which a liquid medium is added to a mixture of given amounts of carbon particles and inorganic particles and then mixed; a method in which carbon particles are added to an inorganic particle dispersion liquid containing inorganic particles dispersed in a liquid medium, and then mixed; a method in which an inorganic particle dispersion liquid containing inorganic particles dispersed in a liquid medium and a carbon particle dispersion liquid containing carbon particles dispersed in a liquid medium are mixed; and a method in which inorganic particles are added to a carbon particle dispersion liquid containing carbon particles dispersed in a liquid medium, and then mixed. Conventionally known mixing machines may be used for mixing. It is desirable to prepare a dispersion liquid by the method in which carbon particles are added to an inorganic particle dispersion liquid containing inorganic particles dispersed in a liquid medium, and then mixed because it is easy to disperse inorganic particles and carbon particles more uniformly.

As for carbon particles, it is desirable to use carbon particles having a large surface area, i.e., fine particles. Since it is easy to pulverize carbon particles finely, it is desirable to use a dispersion liquid obtained by subjecting a mixed liquid prepared by mixing inorganic particles and carbon particles larger in average particle diameter than the inorganic particles to pulverization treatment. Fine particles are prone to cohere in a liquid medium. It is presumed, however, that when inorganic particles and carbon particles lager in average particle diameter than the inorganic particles are subjected to pulverization treatment in the presence of a liquid medium, the inorganic particles adhere to the pulverized carbon fine particles to exhibit an effect of inhibiting the cohesion of carbon fine particles in a dispersion liquid.

As to the material of the current collector, aluminum, copper, iron, etc. are preferable. In particular, aluminum is more preferred because of its light weight and low electric resistance. As to the form of the current collector, the current collector is preferably in the form of a film having a thickness that is within the range of 20 µm to 100 µm because it is easy to manufacture a wound electrode or a laminated electrode therefrom. In order to improve the adhesiveness between the current collector and the electrode film, it is preferable that the surface of the current collector be roughened by etching treatment.

In the step of forming a dispersion liquid by applying the aforementioned dispersion liquid to a current collector, the dispersion liquid can be applied by using a conventional applicator, such as a handy film applicator, a bar coater and a die coater. The liquid medium is then removed from the formed dispersion liquid, so that a film made of a mixture of the carbon particles and the inorganic particles is formed on the current collector. As to the method for removing the liquid medium, it is desirable, from the viewpoint of enhancement of the force binding carbon particles, to perform drying at a temperature of 50 to 80°C for 10 to 30 minutes first, and then perform drying at a temperature of 100 to 200°C for 1 to 60 minutes.

By compressing the film made of the mixture at a temperature which is not lower than the melting point of the carbon particles and not lower than the melting point of the inorganic particles to increase the bulk density of the mixture, it is possible to obtain a laminated electrode in which an electrode film made of a film composed of the inorganic particles and the carbon particles bound together with the inorganic particles has been formed on the current collector.

An electrode film made of only carbon particles and inorganic particles can be obtained by removing the current collector by peeling or dissolving it from the laminated electrode obtained by the aforementioned method. Since such an electrode film contains carbon in an amount per unit volume increased by the absence of a current collector in comparison to the conventional electrodes, the use of this electrode film can be expected to provide an electric double layer capacitor having a large electrostatic capacitance.

Electrode films and laminated electrodes produced by the methods of the present invention can be used as electrodes of dry batteries, redox capacitors, hybrid capacitors, electric double layer capacitors, etc., and they are particularly suitable as constituents of electric double layer capacitors. Examples of an electric double layer capacitor include a capacitor in which a separator is disposed between two electrodes and an electrolytic solution is filled in between the separator and each of the electrodes, and a capacitor in which a solid electrolyte (gel electrolyte) is filled in between two electrodes.

By charging, a positive electrode is charged in plus (+), so that a negative electrolyte forms an electrical double layer at the interface of the positive electrode, and at the same time, a negative electrode is charged in minus (-), so that a positive electrolyte forms an electrical double layer at the interface of a negative electrode. As a result, electrical energy is stored. Even if the charging is stopped, the electric double layers are maintained. When discharging is performed, the electric double layers are eliminated, so that electric energy is released. While an electric double layer capacitor may be a cell having two electrodes, that is, a pair of a positive electrode and a negative electrode, it may be a capacitor having a combination of two or more such cells.

One embodiment of the present invention is a method for producing an electric double layer capacitor, the method comprising disposing two laminated electrodes, each comprising a current collector and an electrode film laminated on the current collector, and a separator to render the electrode films confronted each other and separated with the separator, winding or laminating the laminated electrodes with the separator intervening the electrode films, and then packing the wound or laminated electrodes and the separator together with an electrolyte solution into a metal case, wherein the method further comprising the following steps for preparing each of the laminated electrodes. Specific examples of the electric double layer capacitor produced by the method of the present invention include a coin-shaped capacitor produced by arranging two disc-shaped laminated electrodes and a separator so that the electrode films of the laminated electrodes may face each other and the electrode films may be separated by the separator, laminating the laminated electrodes and the separator together while placing the separator between the electrode films, and then enclosing them within a coin-shaped case together with an electrolytic solution; a cylindrical capacitor produced by arranging two sheet-shaped laminated electrodes and a separator so that the electrode films of the laminated electrodes may face each other and the electrode films may be separated by the separator, winding the laminated electrodes and the separator together while placing the separator between the electrode films, and then enclosing them within a cylindrical case together with an electrolytic solution; a laminated capacitors comprising film-shaped electrodes or laminated electrodes and a separator laminated together; and a bellows-shaped capacitor.

A mixture of an electrolyte and a solvent may be used as the electrolytic solution. The electrolyte is not particularly restricted and it may be either an inorganic electrolyte or an organic electrolyte. An inorganic electrolyte is used usually in the form of an electrolytic solution after being mixed with water. An organic electrolytes is used usually in the form of an electrolytic solution after being mixed with a solvent containing an organic polar solvent as a main component.

An insulating film having a high ion transmittance and a predetermined mechanical strength is used as the separator. Specific examples include papers of natural fibers, such as natural cellulose and Manila hemp; papers of regenerated fibers or synthetic fibers, such as rayon, vinylon, and polyester; mixed papers made by mixing natural fibers with regenerated fibers or synthetic fibers; nonwoven fabrics, such as polypropylene nonwoven fabric, polyester nonwoven fabric, and a polybutylene terephthalate nonwoven fabric; porous films, such as porous polyethylene, porous polypropylene, and porous polyester; resin films, such as para wholly aromatic polyamide and fluorine-containing resins, e.g., vinylidene fluoride, tetrafluoroethylene, copolymers of vinylidene fluoride and propylene hexafluoride, fluororubber.

### [Examples]

The present invention is further described with reference to examples and comparative examples, but the present invention is not limited to the examples.

### [Example 1]

Activated carbon and acetylene black were used as carbon particles. A product obtained by pulverizing RP-15 produced by Kuraray Chemical Co. , Ltd. with a ball mill for 24 hours was as the activated carbon. The pulverized activated carbon had an average particle diameter of 8.115 µm, which was measured with a laser diffraction/scattering particle size distribution analyzer (HORIBA LA-910) by using water as a medium. DENKA BLACK produced by Denki Kagaku Kogyo Kabushiki Kaisha (average particle diameter = 36 nm) was used as the acetylene black. Colloidal silica "SNOWTEX PS-S" produced by Nissan Chemical Industries, Ltd. (solid concentration = 20% by weight) was used as inorganic particles. This is an aqueous colloid of spherical silica particles with an average particle diameter of 10 to 50 nm linked in the form of a chain of 50 to 200 nm in length.

A dispersion liquid with a solid concentration of 32% by weight was prepared by adding 11.72 g of the colloidal silica to 5.0 g of the activated carbon and 0.625 g of the acetylene black, and further adding pure water, followed by mixing. The solid in the dispersion liquid contained 5.0 g of activated carbon, 0.625 g of acetylene black, and 2.344 g of silica. That is, the amount of the silica particles per 100 parts by weight of carbon particles was 46.9 parts by weight. On each of two 20-µm thick aluminum foils, a dispersion liquid film was formed by applying the aforementioned dispersion liquid with a handy film applicator. Then, water was removed by heating at 60°C for 10 minutes and further heating at 150°C for 1 hour. Thus, two laminates were obtained each having a film made of a mixture of carbon particles and silica particles on a current collector. The thicknesses of the films in the laminates were 100 µm and 65 µm, respectively.

Both the laminates were compressed at room temperature at 50 kgf/cm² for 3 minutes, so that two laminated electrodes each being made of a current collector and an electrode film composed of a compression film were obtained. Both the laminated electrodes had no rifts, and the thicknesses of the electrode films in the laminated electrodes were 91 µm and 61 µm, respectively.

The two electrodes obtained were each cut into a size of 1.5 cm x 2.0 cm. They were fully dried and then were assembled within a glove box into an electric double layer capacitor by using stainless steel as a current collector. The two laminated electrodes were arranged so that their electrode films might face each other and were laminated while a natural cellulose paper was placed as a separator between the electrode films. These components were enclosed together with an electrolytic solution, LIPASTE-P/TEMAF 14N, produced by Takayama Chemical Industries, Ltd. into an aluminum case, form an electric double layer capacitor.

The resulting electric double layer capacitor was charged at a constant current of 300 mA/g until the voltage reached 2.8 V, and then was discharged at a constant current until the voltage became 0 V at the same constant current of 300 mA/g. Thus, the electrostatic capacitance was measured. The result is shown in Table 1.

### [Example 2]

Two laminates were obtained in the same manner as Example 1 except that the thicknesses of the films made of a mixture of carbon particles and inorganic particles in the laminates before compression were adjusted to 80 µm and 65 µm, respectively. Both the laminates were compressed at room temperature at 100 kgf/cm² for 3 minutes, so that two laminated electrode each being made of a current collector and an electrode film composed of a compression film were obtained. Both the laminated electrodes had no rifts, and the thicknesses of the electrode films in the laminated electrodes were 70 µm and 55 µm, respectively. Moreover, an electric double layer capacitor was assembled in the same manner as in Example 1 and then the electrostatic capacitance was measured. The result is shown in Table 1.

### [Example 3]

Activated carbon and acetylene black were used as carbon particles. A product obtained by pulverizing RP-15 produced by Kuraray Chemical Co., Ltd. with a ball mill for 24 hours was as the activated carbon. The pulverized activated carbon had an average particle diameter of 8.115 µm, which was measured with a laser diffraction/scattering particle size distribution analyzer (HORIBA LA-910) by using water as a medium. DENKA BLACK produced by Denki Kagaku Kogyo Kabushiki Kaisha (average particle diameter = 36 nm) was used as the acetylene black. Colloidal silica "SNOWTEX PS-S" produced by Nissan Chemical Industries, Ltd. (solid concentration = 20% by weight) was used as inorganic particles.

A dispersion liquid with a solid concentration of 32% by weight was prepared by adding 15.63 g of the colloidal silica to 5.0 g of the activated carbon and 0.625 g of the acetylene black, and further adding pure water, followed by mixing. The composition of the dispersion liquid included 5 g of activated carbon, 0.625 g of acetylene black, and 3.126 g of silica. That is, the amount of the silica particles per 100 parts by weight of carbon particles was 62.52 parts by weight. On each of two 20-µm thick aluminum foils, a dispersion liquid film was formed by applying the aforementioned dispersion liquid with a handy film applicator. Then, water, which was a solvent, was removed by heating at 60°C for 10 minutes and further heating at 150°C for 1 hour. Thus, two laminates were obtained each having a film made of carbon particles and silica particles on a current collector. The thicknesses of the films in the laminates were 75 µm and 85 µm, respectively.

Both the laminates were compressed at room temperature at 50 kgf/cm² for 3 minutes, so that two laminated electrodes each being made of a current collector and an electrode film composed of a compression film were obtained. Both the laminated electrodes had no rifts, and the thicknesses of the electrode layers in the laminated electrodes were 70 µm and 73 µm, respectively.

An electric double layer capacitor was assembled in the same manner as in Example 1 except for using these laminated electrodes, and then the electrostatic capacitance was measured. The result is shown in Table 1.

### [Example 4]

Two laminates were obtained in the same manner as Example 3 except that the thicknesses of the films made of a mixture of carbon particles and silica particles were adjusted to 90 µm and 100 µm, respectively. Both the laminates were compressed at room temperature at 100 kg/cm² for 3 minutes, so that two laminated electrodes each being made of a current collector and an electrode film composed of a compression film were obtained. Both the laminated electrodes had no rifts, and the thicknesses of the electrode films in the laminated electrodes were 79 µm and 95 µm, respectively.

An electric double layer capacitor was assembled in the same manner as in Example 1 except for using these laminated electrodes, and then the electrostatic capacitance was measured. The result is shown in Table 1.

### [Comparative Example 1]

Two laminates were obtained in the same manner as Example 1 except that the thicknesses of the films made of a mixture of carbon particles and inorganic particles in the laminates before compression were adjusted to 130 µm and 110 µm, respectively. An electric double layer capacitor was assembled in the same manner as in Example 1 except for using the laminates without compressing them, and then the electrostatic capacitance was measured. The result is shown in Table 1.

### [Comparative Example 2]

Two laminates were obtained in the same manner as Example 3 except that the thicknesses of the films made of a mixture of carbon particles and silica particles were adjusted to 80 µm and 85 µm, respectively. An electric double layer capacitor was assembled in the same manner as in Example 1 except for using the laminates without compressing them, and then the electrostatic capacitance was measured. The result is shown in Table 1.

**Table 1**

| | Thickness of electrode film before compression (µm) | Thickness of electrode film after compression (µm) | Change rate of film thickness (%) | Electrostatic capacitance (F/cc) |
|---|---|---|---|---|
| Example 1 | 100 | 91 | 9.0 | 12.9 |
| | 65 | 61 | 6.2 | |
| Example 2 | 80 | 70 | 12.5 | 13.6 |
| | 65 | 55 | 15.4 | |
| Comparative Example 1 | 130 | 130 | 0 | 10.6 |
| | 110 | 110 | 0 | |
| Example 3 | 75 | 70 | 6.7 | 11.7 |
| | 85 | 73 | 14.2 | |
| Example 4 | 90 | 79 | 12.3 | 12.8 |
| | 100 | 95 | 5.0 | |
| Comparative Example 2 | 80 | 80 | 0 | 11.4 |
| | 85 | 85 | 0 | |

The electric double layer capacitors of Examples 1 and 2, which have laminated electrodes obtained through compression, are greater in electrostatic capacitance per unit volume than the electric double layer capacitor of Comparative Example 1, which has uncompressed laminated electrodes.

Moreover, it is apparent that the electric double layer capacitors of Examples 3 and 4, which have laminated electrodes obtained through compression, are greater in electrostatic capacitance per unit volume than the electric double layer capacitor of Comparative Example 2, which has uncompressed laminated electrodes. In addition, from the fact that the film thicknesses have decreased in the Examples, it is seen that the bulk densities of the films have been increased by compression.

### INDUSTRIAL APPLICABILITY

According to the present invention, a film and an electrode film each being made of inorganic particles and carbon particles bound with the inorganic particles and having a high bulk density can be obtained easily without occurrence of breakage. Moreover, a laminated electrode having a large electrostatic capacitance per unit volume and an electric double layer capacitor having a large electrostatic capacitance per unit volume can also be obtained easily.

## Claims

1. A method for producing a film comprising inorganic particles and carbon particles bound together with the inorganic particles, the method comprising a step of compressing a film composed of a mixture comprising carbon particles and inorganic particles at a temperature which is not higher than the melting point of the carbon particles and not higher than the melting point of the inorganic particles to increase the bulk density of the mixture.

2. The method according to claim 1, wherein the average particle diameter of the inorganic particles is not greater than 1/10 the average particle diameter of the carbon particles.

3. The method according to claim 2, wherein the average particle diameter of the inorganic particles is within the range of from 1 nm to 100 nm.

4. The method according to claim 2 or 3, wherein the average particle diameter of the carbon particles is within the range of from 10 nm to 50 µm.

5. The method according to any one of claims 1 to 4, wherein the mixture comprises 100 parts by weight of the carbon particles and from 10 to 70 parts by weight of the inorganic particles.

6. The method according to any one of claims 1 to 5, wherein the pressure applied during the compression is within the range of from 10 to 500 kgf/cm².

7. The method according to any one of claims 1 to 6, wherein the temperature applied during the compression is within the range of from 10 to 50°C.

8. The method according to any one of claims 1 to 7, wherein the inorganic particles are silica particles.

9. A method for producing a laminated electrode comprising a current collector and an electrode film laminated on the current collector, the method comprising:
a step of preparing a dispersion liquid by dispersing carbon particles and inorganic particles in a liquid medium,
a step of applying the dispersion liquid to a current collector to form a dispersion liquid film on the current collector,
a step of removing the liquid medium from the dispersion liquid film to form a film composed of a mixture comprising the carbon particles and the inorganic particles on the current collector, and
a step of compressing the film of the mixture on the current collector at a temperature which is not lower than the melting point of the carbon particles and not lower than the melting point of the inorganic particles to increase the bulk density of the mixture, thereby forming a laminated electrode in which an electrode film composed of a film comprising the inorganic particles and the carbon particles bound together with the inorganic particles has been laminated on the current collector.

10. A method for producing an electric double layer capacitor, the method comprising disposing two laminated electrodes, each comprising a current collector and an electrode film laminated on the current collector, and a separator to render the electrode films confronted each other and separated with the separator, winding or laminating the laminated electrodes with the separator intervening the electrode films, and then packing the wound or laminated electrodes and the separator together with an electrolyte solution into a metal case, wherein the method further comprising the following steps for preparing each of the laminated electrodes:
a step of preparing a dispersion liquid by dispersing carbon particles and inorganic particles in a liquid medium,
a step of applying the dispersion liquid to a current collector to form a dispersion liquid film on the collector,
a step of removing the liquid medium from the dispersion liquid film to form a film composed of a mixture comprising the carbon particles and the inorganic particles on the current collector, and
a step of compressing the film of the mixture on the current collector at a temperature which is not lower than the melting point of the carbon particles and not lower than the melting point of the inorganic particles to increase the bulk density of the mixture, thereby forming a laminated electrode in which an electrode film composed of a film comprising the inorganic particles and the carbon particles bound together with the inorganic particles has been laminated on the current collector.
